# EUROPEAN PATENT APPLICATION

(11) **EP 2 535 483 A2**
(43) Date of publication of application: **19.12.2012**
(21) Application number: 11741928.3
(22) Date of filing: 09.02.2011
(51) Int. Cl.: E04H 1/12

(54) **FOLDABLE AND STACKABLE BATHROOM CABIN**

(30) Priority: 09.02.2010 ES 201000159
(71) Applicant: Miguel Serdá, Joan, 08223 Terrassa Barcelona (ES)
(72) Inventor: Miguel Serdá, Joan, 08223 Terrassa Barcelona (ES)
(74) Representative: Sugrañes Patentes y Marcas
(86) International application number: PCT/ES2011/000029
(87) International publication number: WO 2011/098640

(57) **Abstract**

The invention relates to a foldable and stackable bathroom cabin having multiple purposes such as a dressing room and a storage room, as toilet and shower; which can be connected directly to the waste discharge network. It is equipped with four telescopic columns, foldable in sections controlled by means of casings, with securing mechanisms ending in the corresponding end deployment stops on the upper part of said columns. It is equipped with fabric tarpaulins for the walls and zipper closure on its front wall; and on the upper part of said columns there are arranged four cone-shaped stops for its support and balance during stacking of said cabins in the folded state. When folded, they allow storing up to 200 cabins in a space of 5.9 x 6.15 x 5.9 metres. The cabin is equipped with fittings for use in the modes of chemical recirculating toilets; squat toilets; dry toilets with mechanical waste discharge; and vacuum toilets.

## Description

The present invention generally relates to the bathroom-type stand-alone systems, and particularly to a bathroom cabin foldable and stackable in large numbers consisting of different fittings for use in the different modes of recirculating chemical toilets; squat toilets; dry toilets with mechanical waste discharge; and stand-alone vacuum-operated toilet, toilet with removable tank, shower and the system can be connected to the waste discharge network.

### Object of the Invention

The object of the present invention is to develop a bathroom cabin foldable and stackable in large numbers of the type which are telescopically foldable, designed for easy and simple transportation using different types of transportation, namely, pallet truck, fork-lift, or manual transportation.

A second object is to develop a multi-purpose cabin based on said stackable and transportable cabin for different bathroom applications such as a dressing room, a storage room, a shower, and different variants of toilet.

### State of the Art

There are many areas of use where portable bathroom facilities are necessary such as in the construction of various objects, holding large events, in open areas such as beaches and natural surroundings, in agriculture, for the armed forces which are in training grounds, and all type of natural disaster emergencies. These needs are even more apparent and urgent when they involve a large number of users.

Different solutions generally involving a high installation cost due to their transportation cost (fixed and mobile units), storage and waste removal (waste water storage and removal) are known in the state of the art. Portable individual bathroom cabins in particular involve a significant transportation and storage cost.

Document GB 1477482 describes a bathroom cabin suitable to be transported in a container. It comprises a lower and an upper section interconnected to one another, wherein the lower section can be releasably bolted and included within the upper section for its transportation, and can alternatively be released for its assembly. It incorporates an unloading chamber for the bathroom unit.

Document CN 2796621 proposes a shower cabin which height can be regulated; the cabin can be folded, rolled-up and concealed inside a cabin. It consists of a hoist, a traction belt which is connected with the shower cabin cover, and a zipper which is connected with the shower cabin water catch bowl. It can be installed temporarily outdoor or indoor. Its drawback is that it mainly requires indoor installation, its outdoor use is considerably limited.

Document JP2005176998 describes a non-bulky portable toilet foldable into a compact shape or stackable suitable for being transported manually. It consists of a small funnel-shaped liquid receiving cup formed with an orifice at the bottom for discharging urine; a hose extending from the orifice of the bottom, and a lid with one end screwed on the mouth of a container for storing urine and the other end attached to the end of said hose. It eliminates contamination by the liquid waste stored in the container until its subsequent removal. It does not solve the problem of privacy provided by bathroom cabins.

Document US 2003121093 claims a portable toilet in the form of a cabin which can be stacked and is relatively easy to assemble. The portable toilet includes a collapsible enclosure intended for receiving a roof. The foldable enclosure includes respective opposite walls and respective side walls at both ends. The portable toilet in the form of a cabin is partially disassembled when it is folded at a height corresponding to the thickness of two walls, wherein the opposite walls of both ends are folded respectively towards each other and rest on the side walls. However, the system itself is quite bulky, complicated to fold, and has the drawback that parts of the folded structure (doors) are outside the fold, and must be transported separately.

Document W02008089319 describes a collapsible structure, mainly for a toilet, which can be moved from a raised position to a lowered position, a structure providing a private space. The inventors state that when the structure is in its lowered position it is easily stackable and transportable. Additionally, it does not contain therein loose pieces or pieces to be assembled. The collapsible structure has an upper section comprising a roof, a wall-type upper member and a door-type upper member, a middle section with a middle member and a middle panel with a door and a lower section which has a base, bottom middle wall and a bottom door panel. The three telescopic sections are deployed respectively from one another, and folded respectively to one another. However, the dimensions and the design of the structure itself is quite bulky, and the deploy and folding thereof is not very straightforward. A considerable space is taken up when stacking several structures.

In short, it must be highlighted that in the state of the art there are no references referring to:
- a foldable and stackable bathroom cabin similar to the object of the invention with the features of a bathroom cabin which is telescopically foldable and stackable in large numbers, designed for its easy and simple transportation using different types of transportation, namely, pallet truck, fork-lift, or manual transportation.
- neither were there any references to any multi-purpose system for different bathroom applications such as foot pump-operated recirculating chemical toilet, 2 stage recirculating chemical toilet, toilet with a squat pan with free fall to plinth, toilet with squat pan equipped with an open waste pipe, dry toilet with mechanical discharge and accumulation in a pit, dry toilet with mechanical discharge and accumulation in a box, vacuum discharge toilet; and shower cabin.

The present invention thus fulfils the existing need for an essentially new cabin solving the drawbacks of the devices known up to now and which at the same time meet the features of simple and multi-purpose transportation.

### Description of the Invention

The present invention proposes a new multi-purpose bathroom cabin based on a foldable and stackable cabin which without the addition of its fittings can serve as a dressing room, a storage room or for other purposes.

The cabin is very easy and quick to fold and deploy. This possibility is particularly important since it allows storing a high number of folded cabins in a smaller space, for example, up to 200 cabins in a space of 5.9 x 6.15 x 5.9 metres.

The bathroom cabin can be equipped with different fittings, i.e., foot pump-operated recirculating chemical toilet, 2 stage recirculating chemical toilet, toilet with a squat pan with free fall to plinth, toilet with a squat pan equipped with an open waste pipe, dry toilet with mechanical discharge and accumulation in a pit, dry toilet with mechanical discharge and accumulation in a box, vacuum discharge toilet; and finally as a shower cabin.

### Structure of the Cabin

The base cabin of the invention allows its height to be increased from 70 up to 234 cm in less than one minute. It is very light as a result of the materials from which it is made. Tools are not required for deploying it. It is based on three stackable units, although it is easy to deploy in a greater number of units depending on the needs. A great saving in transportation is achieved. Additionally, as a result of its design where three stackable units are inserted into one another, it saves quite a lot of space during storage. It is very light as a result of the materials from which it is made.

The cabin is fixed by four anodised aluminium columns with telescopic extension such that at its final height they are blocked and correctly maintain the structure for use. The body of the cabin attaching the roof with the base is formed by a fabric material and plasticized by a flame retardant treatment and a front zipper closure. This material is attached to the roof and when the cabin is folded it is rolled-up within the bathroom cabin.

### Stacking Feature of the Cabin

The roof and the base of the base cabin of the invention are made from polyethylene with ultraviolet UV protection, and they are envisaged to adapt to one another, and to be stacked in a number of up to 200 cabins safely and securely in a space of 5.9 x 6.15 x 5.9 metres.

### Handling Feature and Transportation of the Stackable Units of the Bathroom Cabin

The base of the cabin is made such that it is possible to transport it both by the pallet truck transportation system and/or with a fork-lift. At the sides of the base there are arranged handles for its handling and manual transfer.

The foldable and stackable bathroom cabin is thus envisaged for multiple purposes such as a dressing room and a storage room, and different bathroom applications such as foot pump-operated recirculating chemical toilet, 2 stage recirculating chemical toilet, toilet with a squat pan with free fall to plinth, toilet with a squat pan equipped with an open waste pipe, dry toilet with mechanical discharge and accumulation in a pit, dry toilet with mechanical discharge and accumulation in a box, vacuum discharge toilet; and a shower cabin. This is based on a design of a cabin formed by foldable and stackable elements, envisaged so that said elements take up little space in their storage and transportation, and that it is additionally capable of being easily and simply transported using the different types of transportation available.

The object of the invention will now be described based on the three preferred embodiments which will be better understood based on the following attached drawings

### Drawings

The preferred embodiments of the present invention based on the following drawings will be described below, the drawings are:
Figure 1 shows a front view (A) and side view (B) of a cabin without any fitting, valid for a dressing room or a storage room .
Figure 2 shows a front view of a cabin in a folded state.
Figure 3 shows a front view of the tensing system for tensing the tarpaulin or canvas by means of the inner spring.
Figure 4 shows a front view of the securing mechanism and the end deployment stop.
Figure 5 shows a front view of three folded and stacked cabins.
Figure 6 shows a front view of the placement of 150 folded cabins in a space of 36 m² and stacked in blocks of 3 + 3 in height .
Figure 7A shows a front view of the stackable cabin equipped with a foot pump-operated toilet.
Figure 7B shows a side view of the stackable cabin equipped with a foot pump-operated toilet.
Figure 8 shows a front view (A) and side view (B) of a cabin equipped with a 2 stage recirculating chemical toilet.
Figure 9 shows a front view (A) and side view (B) of a cabin equipped with a squat toilet with free fall to plinth.
Figure 10 shows a front view (A) and side view(B) of a cabin equipped with a free fall squat toilet and squat pan with open waste pipe.
Figure 11 shows a front view (A) and side view (B) of a cabin equipped with a dry toilet with pressure wheel-operated mechanical movement and with discharge to a pit.
Figure 12 shows a front view (A) and side view (B) of a cabin equipped with a dry toilet with pressure wheel-operated mechanical movement, but with discharge to a box.
Figure 13 shows a front view (A) and side view (B) of a cabin equipped with a vacuum discharge toilet.
Figure 14 shows a front view (A) and side view (B) of a used cabin equipped with a shower.

### Description of the Preferred Embodiments

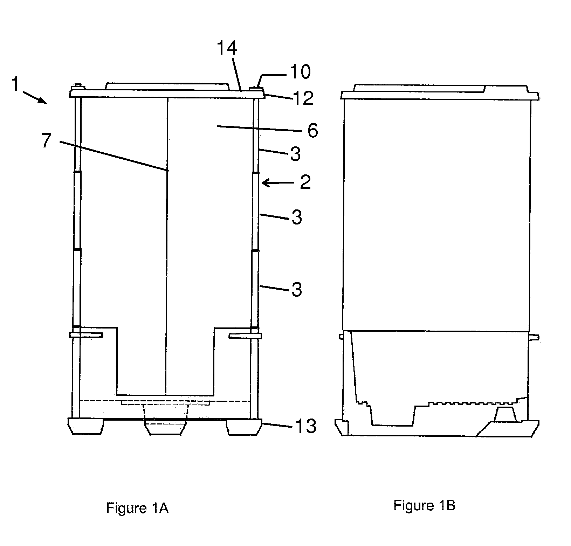

A first preferred embodiment corresponds to the cabin 1 without any type of fitting. Figure 1 shows the front view A and the side view B of the foldable and stackable cabin 1 of the present invention in deployed state. The four telescopic columns 2 located at the four ends thereof foldable along the sections 3, which outward projection will be used for deployment can be seen in the four corners. Said sections are controlled by means of the casings 3a, and they are equipped with the securing mechanisms or devices 4 and with end deployment stops 5. The four sides of the multi-purpose cabin are covered by a tarpaulin or canvas 6 made of a semi-flexible and plasticized fabric, wherein the front side is equipped with a zipper closure system 7. This material is attached to the roof and is rolled-up inside the multi-purpose bathroom cabin when the cabin is folded.

Since it has no fittings, in this first preferred embodiment the inner space of said cabin 1 is empty so that the user can freely change clothes, or it is used for storing the tools necessary in the work area.

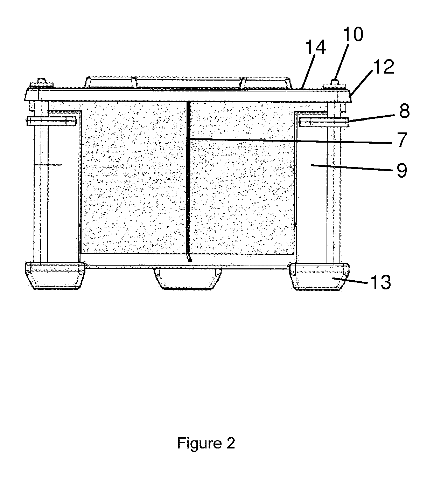

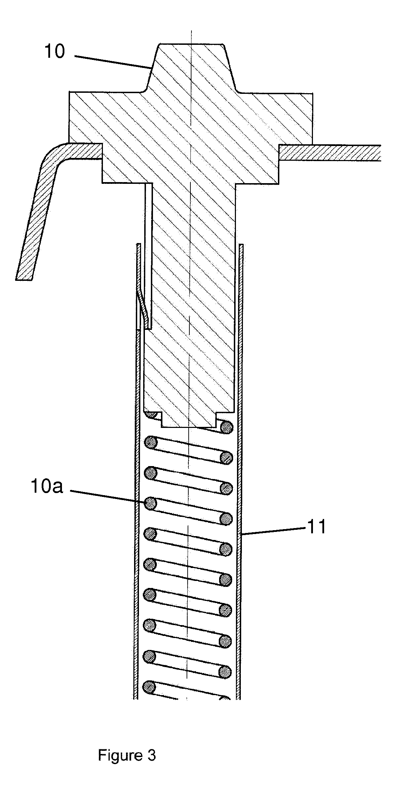

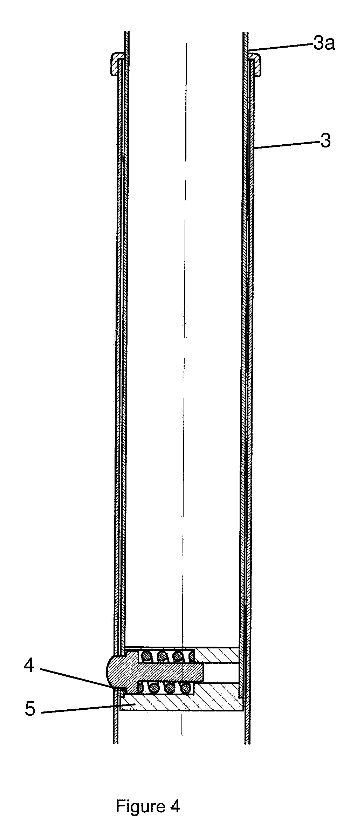

Figure 2 shows a front view of the foldable and stackable bathroom cabin 1 of the present invention in folded state. The lid 12 which corresponds to the roof of the cabin 1 in its deployed form and which conceals in its rolled-up form said tarpaulin or canvas 6 made of semi-flexible material forming the side and rear walls of the multi-purpose bathroom cabin 1, including the tensing system for tensing said tarpaulin or canvas 6 is seen on the upper part of the cabin 1. Said tensing system for tensing the tarpaulin or canvas 6 is established by means of the inner spring 10a in the upper section 11 of the columns 2, see Figure 3. The telescopic columns 2 formed by the sections 3 and controlled by means of casings 3a are equipped with a securing mechanism or device 4 and the end deployment stop 5 thereof as shown in Figure 4.

Figure 2 additionally indicates the intermediate plastic handle 8 for manually handling and moving the stackable cabin, fixed in the fixed base 9 of the cabin 1 and fastening the lower section of the columns. The cone-shaped stops 10 are located on the upper part at the height of the lid 12, they are therefore located on the upper part of the columns to provide support and balance during stacking, which stops match in their corners with the lower part of the last section of the next cabin for balancing the lower cabin on the upper cabin. There are located on the lower part of the folded cabin 1 rectangular supports 13 for supporting the multi-purpose cabin 1 which shape matches the free spaces 14 existing in the lids 12 of the cabins 1 for putting and stacking one on top of the other.

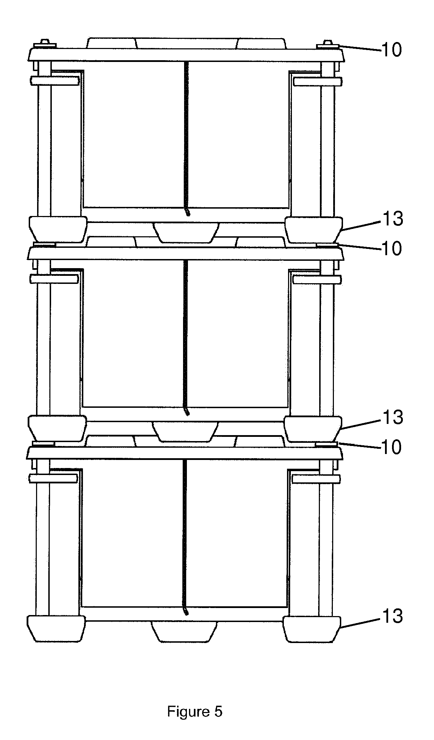

Figure 5 shows a front view of how three bathroom cabins 1 of the present invention are arranged, folded and stacked one on top of the other. It can be seen how the cone-shaped stops 10 match in a balanced manner with the corners of said rectangular supports 13, additionally the shape and dimensions of the free spaces 14 of the lid 12 of the lower multi-purpose cabin 1 match precisely with the dimensions of said rectangular supports 13 of the intermediate cabin 1, folded and stacked thereon for fitting thereto. In turn, the shape and dimensions of the notches 14 of the lid 12 of the intermediate cabin 1 also match precisely with those of the rectangular supports 13 of the upper multi-purpose cabin 1 for fitting thereto. In all cases, the cone-shaped stops 10 located on the upper part of the columns 2 at the height of the lid 12 are for supporting and balancing the three stacked cabins 2.

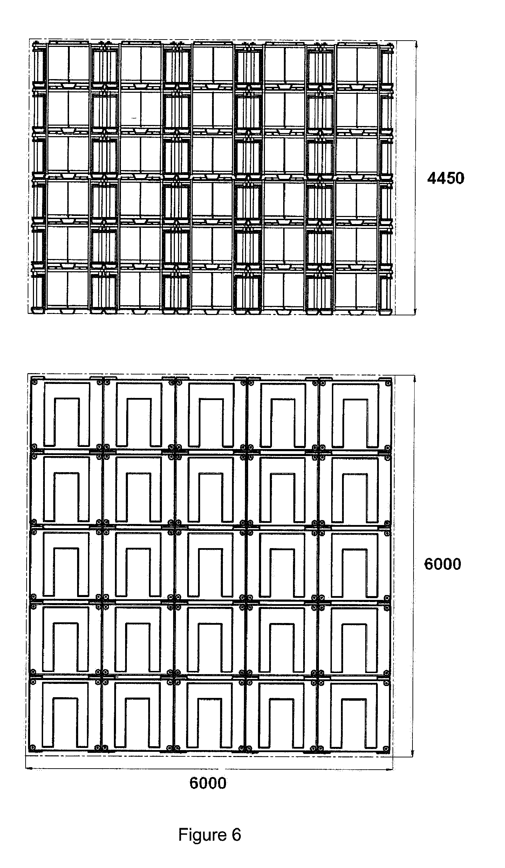

Finally, the utilisation of this important stacking feature can be seen in practice in Figure 6. A front view of the placement of 150 folded cabins in a space of 36 m² and stacked in blocks of 3 + 3 in height is shown. The usefulness of this feature must be pointed out since there is nothing similar in the state of the art, making the cabins very useful in the typical case of prolonged storage in standby or the projection of different temporary work in uninhabited areas, including the cases of natural disasters, accidents and large scale outdoor events.

A second preferred embodiment corresponds to the versatility of use of the cabin 1 of the present invention in the different possible toilet types in open spaces.

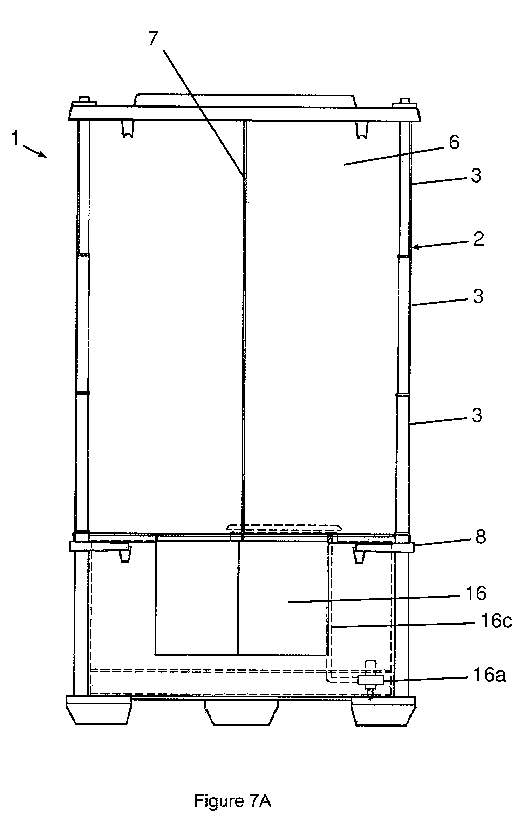

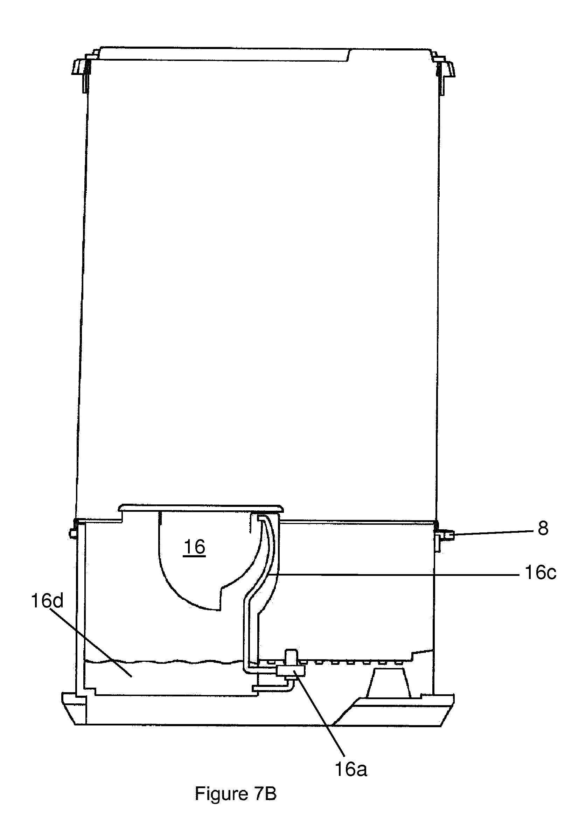

A first type corresponds to the cabin 1 of the present invention based on the stackable cabin of the first embodiment, deployed and equipped with foot pump-operated chemical toilet fitting. Figure 7A shows the front view equipped with this toilet, where the different elements forming such toilet, namely, the bowl 16, the foot pump 16a, the conduit 16c, and liquids tank 16d can be seen. Figure 7B shows the side view of the cabin equipped with a chemical toilet 16 with foot pump 16a.

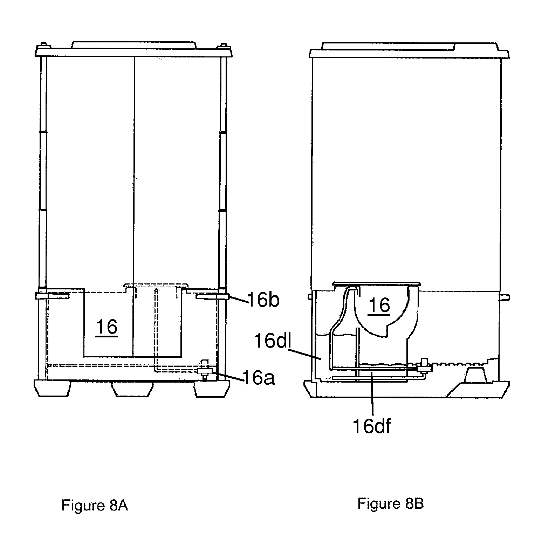

A second type corresponds to a cabin 1 also equipped with a chemical toilet 16 of the 2 stage recirculating type (Figure 8A: front view, Figure 8B: side view), based on the stackable cabin of the first embodiment. The cabin works according to a dual-phase operational system. In the first stage in the tank there is a cistern only allowing the flow of blue water (clean water) originating from a first compartment 16dl in the first 120 or 200 services (times which the pump is pressed). From that moment forth, the used water will start to mix with the faecal waters in a second compartment 16df. In a second stage, as the clean water compartment is emptied, the faecal waters compartment is filled in a greater proportion since urine and others are added, once the faecal water tank is completely filled, it starts to pour into the blue water tank, and at that time recycling services become available.

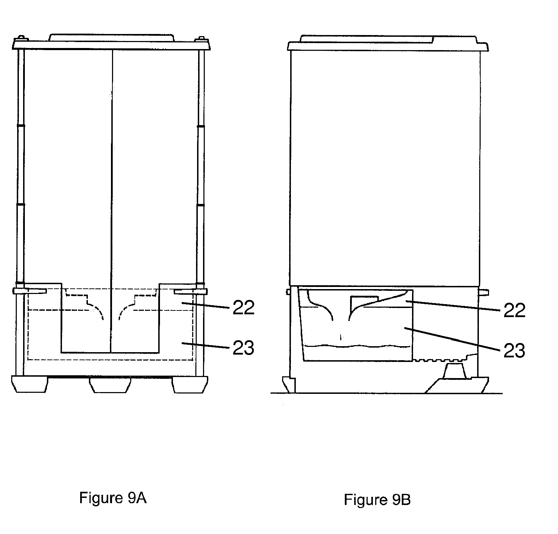

A third type corresponds to a cabin 1, based on the stackable cabin of the first embodiment, equipped with toilet 16 with a squat pan. It is characterised by a free fall to plinth. The excrement is accumulated in a box 23 arranged below the squat pan 22, see Figure 9, wherein Figure 9A corresponds to the front view, and Figure 9B corresponds to the side view.

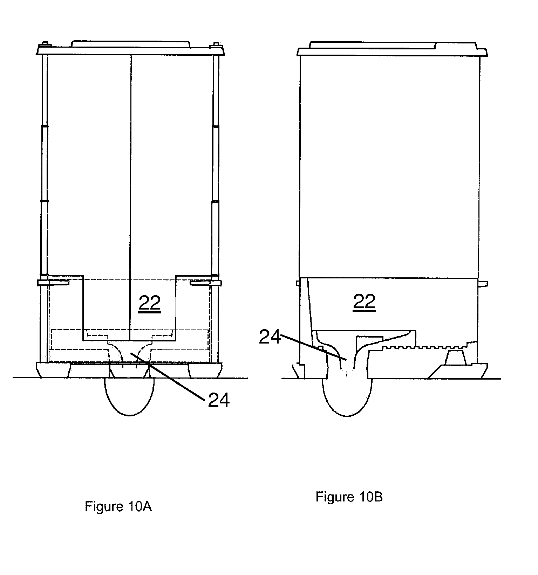

In a fourth type the cabin 1, based on the stackable cabin of the first embodiment, corresponds to a foldable and stackable cabin equipped with toilet 16 also with a squat pan even though it is equipped with an open waste pipe, see Figure 10, wherein Figure 10A corresponds to the front view, and Figure 10B corresponds to the side view. It is characterised by a free fall, in this embodiment, the squat pan 22 is particularly equipped with an open waste pipe 24 for connecting to a contiguous septic pit or by direct deposition to a hole below the bathroom (latrine-type).

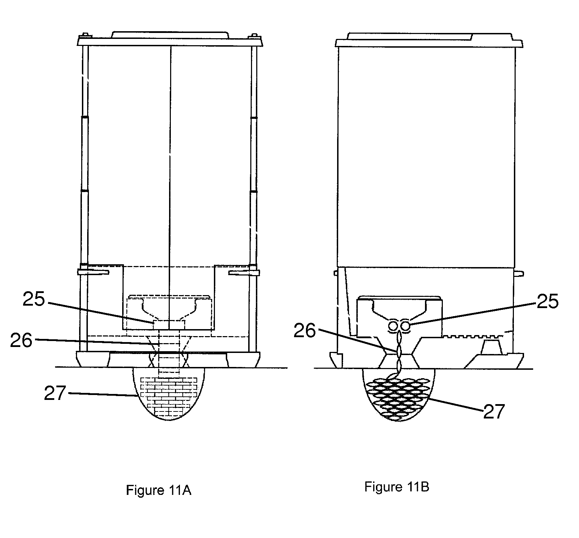

A fifth type corresponds to a cabin 1, based on the stackable cabin of the first embodiment, equipped with a dry toilet 16 with mechanical discharge, see Figure 11, wherein Figure 11A corresponds to the front view and Figure 11B corresponds to the side view. The discharge system is mechanically activated by means of the lever-operated mechanical movement, the pressure wheels 25 are rotated and the excrements are transferred from the upper part to the lower part filling the plastic bag 26 in the form of a pipe which is leak-tight due to the pressure of said wheels. Said waste plastic bag 26 is accumulated in a pit 27 just below the cabin, preventing the loss or filtration of liquid to the ground and without transmitting odours to the environment.

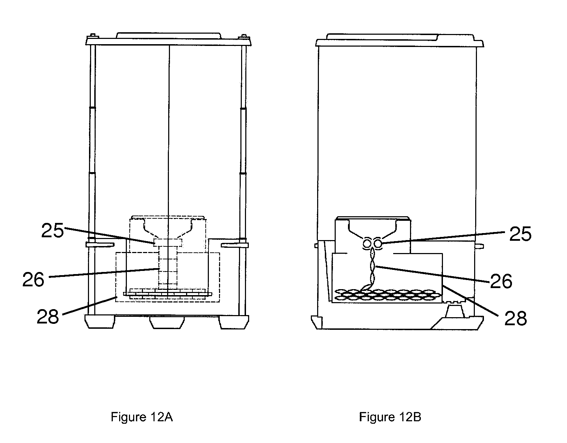

A sixth type the foldable and stackable cabin 1, based on the stackable cabin of the first embodiment, corresponds to a cabin also equipped with a dry toilet 16 with mechanical discharge, see Figure 12, wherein Figure 12A corresponds to the front view and Figure 12B corresponds to the side view. Like the fifth type, the discharge system is mechanically activated by means of the lever-operated mechanical movement, the pressure wheels 25 are rotated and the excrements are transferred from the upper part to the lower part filling the plastic bag 26 in the form of a pipe which is leak-tight due to the pressure of said wheels. Said tubular waste plastic bag 26 is accumulated in a box 28 arranged below the bowl by means of said pressure wheels 25.

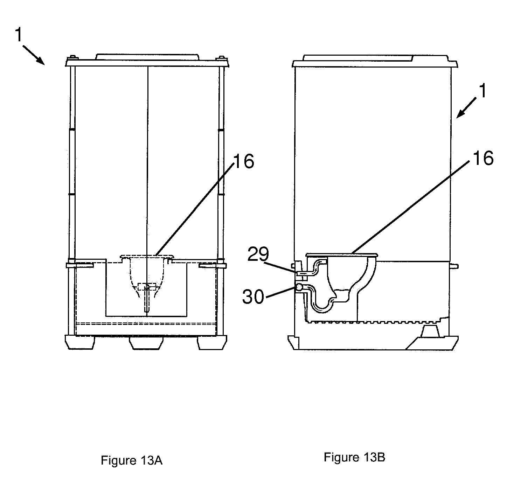

A seventh type corresponds to a cabin 1, based on the stackable cabin of the first embodiment, equipped with a vacuum operated discharge toilet 16, see Figure 13, wherein Figure 13A corresponds to the front view and Figure 13B corresponds to the side view. The water enters through the pipe 29 and exits through the vacuum intake 30 through a vacuum system similar to that used on boats and aeroplanes, to an electronically controlled vacuum station or cistern.

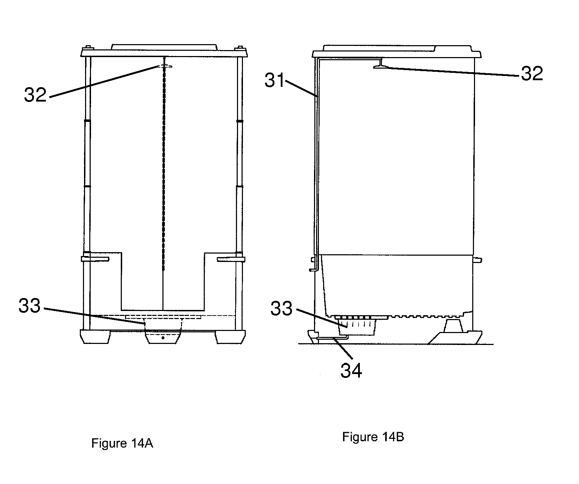

In a third embodiment the cabin 1 of the present invention is used in the shower variant. Shower fitting is incorporated in a variant based on the stackable cabin of the first embodiment, see Figure 14, wherein Figure 14A corresponds to the front view, and Figure 14B corresponds to the side view. The water supply pipe 31, the shower 32, the used water collection container 33, and the used water discharge pipe 34 can be seen.

In summary, the foldable and stackable cabin of the present invention, unlike the cabins of the state of the art, has the following advantages:
- the multi-purpose cabin of the present invention is foldable and stackable, allowing storage in large numbers, taking up minimum space in warehouses or during transportation.
- the multi-purpose cabin is capable to be used in the modes of a dressing room, work tool storage, shower, toilet with removable tank, and stand-alone toilet.
- the multi-purpose cabin significantly facilitates its transfer as a result of its functional design, its transportation being easy and simple using the different means of transportation, namely, pallet truck, fork-lift, or manual transportation.

Having sufficiently described the invention as well as several preferred embodiments thereof, it must only be added that modifying their conformation and the materials used is possible without departing from the scope thereof defined in the following claims.

## Claims

1. A foldable and stackable bathroom cabin **characterised in that** said foldable and stackable cabin (1) is equipped in its corners with four telescopic columns (2) foldable in sections controlled by means of casings (3), with securing mechanisms or device (4) ending in the corresponding end deployment stops (5) on the upper part of said columns (2); wherein said foldable and stackable cabin (1) is equipped with fabric tarpaulins or canvasses (6) for covering the walls, and with a zipper closure (7) located on its front wall; and **in that** on the upper part of said columns (2) of said cabin (1) there are arranged the corresponding four cone-shaped stops (10) for its support and balance during the successive stacking of several of said cabins (1) in folded state.

2. The foldable and stackable bathroom cabin according to claim 1, **characterised in that** said cone-shaped stops (10) of said foldable and stackable cabin (1) are equipped with a spring (10a) for fixing it in position; and **in that** said tarpaulin or canvas (6) is tensed by means of the inner spring (17) in the upper section (11) of said columns (2).

3. The foldable and stackable bathroom cabin according to claim 1, **characterised in that** said foldable and stackable cabin (1) comprises on its upper part a lid (12) which serves as a roof in its deployed form and conceals said fabric tarpaulin or canvas (6) forming its walls in its rolled-up form; a tensing system for tensing said tarpaulin or canvas (6) by means of an inner spring (17) in the upper section (11) of said columns (2); an intermediate plastic handle (8) for manually handling and moving the cabin fixed in the fixed base (9) of said cabin (1) and fastening the lower section of the columns; wherein for the successive stacking of said folded cabins (1) said cone-shaped stops (10), located on the upper part of said foldable and stackable cabin (1) at the height of said lid (12) will match the lower part of the last section of one said folded cabin (1) located on top; and **in that** on the lower part of said foldable and stackable cabin (1) there are located rectangular supports (13) for supporting said foldable and stackable cabin (1), which shape matches the notches (14) made on said lid (12) for stacking said folded cabin (1) on another said folded cabin (1).

4. The foldable and stackable bathroom cabin according to claim 1, **characterised in that** said foldable and stackable cabin (1) is equipped with different fittings for its stand-alone use in the mode of foot pump-operated recirculating chemical toilet (16); 2 stage recirculating chemical toilet (16), equipped with a first compartment, (16dl), from where blue water (clean water) flows, and a second compartment, (16df), where the used water is mixed with the faecal waters; in the mode of a toilet (16) with a squat pan with free fall to plinth, wherein the excretion is accumulated in a box (23) arranged below the squat pan (22); in the mode of a toilet (16) with a squat pan wherein the squat pan (22) is equipped with an open waste pipe (24); in the mode of a dry toilet (16) with mechanical waste discharge by rotating the pressure wheels (25), filling the tubular plastic bag (26) and accumulating the waste in a pit (27); in the mode of a dry toilet (16) with mechanical waste discharge by rotating said pressure wheels (25), filling the tubular plastic bag (26) and accumulating the waste in a box (28); and in the mode of a vacuum discharge toilet (16) wherein the water enters through the pipe (29) and exits through the vacuum intake (30); wherein said cabin (1) can be connected directly to the waste discharge network system for the different fittings.

5. The foldable and stackable bathroom cabin according to claim 1, **characterised in that** said foldable and stackable cabin (1) is equipped with a fitting for use as a shower (32), equipped with the water supply pipe (31), with the used water collection container (33), and with the used water discharge pipe (34); wherein said cabin (1) can be connected directly to the waste discharge network system.
